# EUROPÄISCHE PATENTSCHRIFT

(11) **EP 2 303 542 B1**
(45) Veröffentlichungstag und Bekanntmachung des Hinweises auf die Patenterteilung: **12.04.2017**
(21) Anmeldenummer: 09765636.7
(22) Anmeldetag: 19.06.2009
(51) Int. Cl.: B29C 47/04, G06K 19/06

(54) **DATENTRÄGERKARTE UND VERFAHREN ZUR HERSTELLUNG EINER DATENTRÄGERKARTE**
DATA STORAGE CARD AND METHOD FOR THE MANUFACTURE OF A DATA STORAGE CARD
CARTE DE STOCKAGE DE DONNÉES ET PROCÉDÉ DE FABRICATION D'UNE CARTE DE STOCKAGE DE DONNÉES

(30) Priorität: 20.06.2008 DE 102008029433
(43) Veröffentlichungstag der Anmeldung: 06.04.2011
(73) Patentinhaber: Giesecke & Devrient GmbH, 81677 München (DE)
(72) Erfinder: RIEDL, Josef, 85395 Attenkirchen (DE)
(86) Internationale Anmeldenummer: PCT/EP2009/004453
(87) Internationale Veröffentlichungsnummer: WO 2009/153056

(56) Entgegenhaltungen:
- EP-A- 0 640 940
- EP-A- 0 707 282
- WO-A1-99/24934
- JP-A- S56 156 933
- US-A- 5 928 788
- US-A1- 2008 138 598
- US-B1- 6 248 199
- US-B1- 6 815 070
- DATABASE WPI Week 199817, Derwent Publications Ltd., London, GB; AN 1998-188376 -& JP H1 044652 A (OTAX KK) 17 Februar 1998
- DATABASE WPI Week 200301, Derwent Publications Ltd., London, GB; AN 2003-003140 & JP 2002 172881 A (TOPPAN PRINTING CO LTD) 18 Juni 2002

## Beschreibung

Die Erfindung betrifft eine Datenträgerkarte, insbesondere eine Chip-und/oder Magnetstreifenkarte, sowie ein Verfahren zur Herstellung einer Datenträgerkarte.

Datenträgerkarten werden heutzutage meist aus Kunststofffolien gefertigt, beispielsweise indem mehrere Folien miteinander laminiert werden, um einen Kartenkörper zu bilden, wobei der Kartenkörper in der Regel aus den Folien ausgestanzt wird und anschließend weiterverarbeitet wird, um auf dem Kartenkörper ein entsprechendes Datenspeicher- bzw. Datenverarbeitungsmittel, insbesondere in der Form eines Mikrochips oder eines Magnetstreifens, vorzusehen.

Allgemein können Kunststofffolien durch Extrusionsverfahren hergestellt werden, bei denen ein Schmelzestrom aus Kunststoffmaterial in einem Extruder aufgeschmolzen wird und zur Bildung der Folie durch eine Düse gepresst wird.

In der Druckschrift DE 10 2004 013 201 A1 ist ein sog. Coextrusionsverfahren beschrieben, bei dem zumindest zwei polymere Schmelzeströme mit unterschiedlicher Zusammensetzung zusammengeführt werden, um hierdurch Folien mit Bereichen unterschiedlicher Materialeigenschaften herzustellen.

In der Druckschrift GB 2 348 394 A ist ein weiteres Verfahren zur Coextrusion beschrieben, bei dem eine Folie aus Längsstreifen mit unterschiedlichen Farben zwischen einer unteren und einer oberen Schicht gebildet wird.

Aus der EP 707 282 A2 ist eine ID-Karte entnehmbar, die aus mehreren übereinander gelegten Folien besteht, d.h. aus mehreren vertikal übereinander liegenden Schichten.

Aus der US 5,928,788 A ist eine durch Koextrusion hergestellte Folie mit zwei vertikal übereinander liegenden Schichten bekannt, die sich in ihrer Beschaffenheit unterscheiden.

JP H 1044652 A zeigt eine Karte mit mehreren vertikal übereinander liegenden Schichten, bei der die einzelnen Schichten aus unterschiedlichen Materialien bestehen. Desweiteren ist ein Verfahren beschrieben, wie die einzelnen Schichten hergestellt werden können.

JP 2002172 881 A zeigt eine Karte mit vertikal übereinander liegenden Schichten, die sich in ihrer Beschaffenheit unterscheiden.

WO 99/24934 A1 offenbart eine Karte mit vertikal übereinander liegenden Schichten, in denen ein Chip und eine Spule angeordnet sind.

JP 56156933 offenbart die Koextrusion einer Folie aus zwei Ausgangsstoffen mittels einer T-Düse, deren Querschnitt an einer Oberseite feine Nuten aufweist. Erzeugt wird ein Band, das auf einem ersten Material basiert und an einer Oberseite feine Streifen aus einem zweiten Material aufweist.

US 6,815,070 offenbart eine Glas-Kunststoff-Verbundfolie, für die zunächst eine Glasschmelze erzeugt und darauf anschließend ein Kunststoff aufgebracht wird.

### Fortsetzung mit ursprünglicher S. 2

Bei der Herstellung von herkömmlichen Datenträgerkarten besteht das Problem, dass Bereiche mit unterschiedlichen Materialeigenschaften, wie z.B. farblich unterschiedlich ausgestaltete Gebiete, in separaten Verarbeitungsschritten, z.B. durch drucktechnische Maßnahmen, erzeugt werden müssen, wodurch sich die Herstellung solcher Datenträgerkarten aufwändig gestaltet. Aufgabe der Erfindung ist es deshalb, in einer Datenträgerkarte auf einfache Weise Bereiche mit verschiedenen Materialeigenschaften auszubilden. Diese Aufgabe wird durch die Datenträgerkarte gemäß dem unabhängigen Patentanspruch 1 sowie ein entsprechendes Verfahren zur Herstellung einer Datenträgerkarte gemäß dem unabhängigen Anspruch 16 gelöst. Weiterbildungen der Erfindung sind in den abhängigen Ansprüchen definiert.

Der Erfindung liegt die Erkenntnis zu Grunde, dass durch Coextrusion hergestellte Folien in geeigneter Weise für Datenträgerkarten verwendet werden können, um Bereiche mit unterschiedlichen Materialeigenschaften, insbesondere verschiedene Flächenbereiche, zu bilden. Auf diese Weise können separate Verarbeitungsschritte zur Bildung von Bereichen mit unterschiedlichen Eigenschaften weggelassen werden.

In einer weiteren Ausgestaltung der Erfindung weist der Kartenkörper ebenfalls mehrere, übereinander liegende Folien auf, wobei zumindest ein Teil der Folien vollflächig aus einem Material gebildet sind und auf zumindest einer Seite der coextrudierten Folie angeordnet sind. Auf diese Weise kann die Stabilität des Kartenkörpers erhöht werden. Die vollflächig aus einem Material gebildeten Folien können dabei transmittierende oder opake Folien sein, wobei unter transmittierend sowohl vollkommen lichtdurchlässig, d.h. transparent, als auch teilweise lichtdurchlässig, d.h. transluzent, zu verstehen ist.

In einer besonders bevorzugten Ausführungsform sind die zumindest zwei Bereiche der coextrudierten Folien bzw. zumindest einer coextrudierten Folie aus unterschiedlichen Materialien gebildet. Ebenso können die zumindest zwei Bereiche aus dem gleichen Basismaterial mit unterschiedlichen Zusatzstoffen gebildet sein. Die verschiedenen Bereiche mit unterschiedlichen Materialeigenschaften können sich insbesondere in ihren optischen Eigenschaften unterscheiden. Beispielsweise kann zumindest ein Bereich der zumindest zwei Bereiche einer coextrudierten Folie opak sein und zumindest ein anderer Bereich der zumindest zwei Bereiche der coextrudierten Folie kann transmittierend, insbesondere transparent bzw. transluzent, sein. Die optischen Eigenschaften der Bereiche können sich auch im Hinblick auf ihre Polarisationseigenschaften unterscheiden. Insbesondere kann zumindest ein Bereich der zumindest zwei Bereiche polarisierend sein, so dass er nur Licht mit einer vorbestimmten Polarisation durchlässt. Auf diese Weise können besonders einfach verschiedene optische Effekte im Kartenkörper erzeugt werden.

In einer besonders bevorzugten Ausführungsform des erfindungsgemäßen Datenträgers ist zumindest ein Bereich der zumindest zwei Bereiche der oder zumindest einer coextrudierten Folie aus elastischerem und/ oder strapazierfähigerem Material als zumindest ein anderer Flächenbereich der zumindest zwei Flächenbereiche der coextrudierten Folie gebildet. Wird die Datenträgerkarte beispielsweise später in einem elektronischen Identifikationsbuch zur Identifikation einer Person verwendet, ist insbesondere ein an der Nahtstelle des späteren Identifikationsbuchs liegender Bereich der oder zumindest einer coextrudierten Folie elastischer als ein nicht an der Nahtstelle des späteren Identifikationsbuchs liegender Bereich der coextrudierten Folie. Auf diese Weise wird eine hohe Stabilität des Identifikationsbuchs in einem Bereich gewährleistet, in dem sich vorzugsweise die relevanten Identifikationsdaten befinden (d.h. entfernt von der Nahtstelle), wobei gleichzeitig eine gute Handhabung des Identifikationsbuchs beim Umblättern durch den elastischen Bereich an der Nahtstelle gewährleistet ist.

Die verschiedenen Bereiche der bzw. zumindest einer coextrudierten Folie können aus beliebigen Kunststoffen gebildet sein. Vorzugsweise werden hierzu ein oder mehrere der folgenden Materialien verwendet: Polycarbonat, PET (PET = Polyethylenterephthalat), PETG (PETG = Polyethylenterephthalat-Glykol), TPE (TPE = thermoplastisches Elastomer), TPU (TPU = thermoplastisches Elastomer auf Urethanbasis), Polyolefine, PA (PA = Polyamid), PVC (PVC = Polyvinylchlorid), ABS (ABS = Acrylnitril-Buthadien-Styrol-Copolymerisat).

In dem erfindungsgemäßen Datenträger können ferner die Übergänge zwischen zwei benachbarten Bereichen der bzw. zumindest einer coextrudierten Folie beliebig ausgeführt sein, insbesondere scharf und/ oder auch fließend, wobei sich entlang eines Übergangs die Eigenschaften des Übergangs auch verändern können.

In einer besonders bevorzugten Ausführungsform der erfindungsgemäßen Datenträgerkarte sind eine oder mehrere coextrudierte Folien mit jeweils zumindest einem opaken Bereich und zumindest einem transmittierenden Bereich derart ausgestaltet und/ oder übereinander angeordnet, dass die Datenträgerkarte zumindest ein transmittierendes Fenster und/ oder zumindest einen transmittierenden Fensterstreifen aufweist. Hierdurch kann auf einfache Weise ein Fensterbereich ohne zusätzliche Verarbeitungsschritte gebildet werden. Das Fenster bzw. der Fensterstreifen kann sich dabei durch den gesamten Kartenkörper hindurch erstrecken, jedoch sind auch Fenster bzw. Fensterstreifen denkbar, die nicht durch die gesamte Dicke des Kartenkörpers hindurchgehen, sondern an einem opaken Bereich einer Folie enden.

In einer weiteren Ausgestaltung der Erfindung umfasst die coextrudierte Folie bzw. zumindest eine coextrudierte Folie eine Mehrzahl von sich abwechselnden Streifen, beispielsweise Längsstreifen, mit unterschiedlichen Materialeigenschaften. Insbesondere können sich in der coextrudierten Folie opaken Streifen und transmittierende Streifen abwechseln.

In einer weiteren Ausführungsform der erfindungsgemäßen Datenträgerkarte sind zumindest ein Teil von übereinander liegenden coextrudierten Folie mit abwechselnden opaken und transmittierenden Streifen derart angeordnet, dass durch die Anordnung das zumindest eine Fenster und/ oder der zumindest eine Fensterstreifen gebildet wird. Beispielsweise kann zumindest ein Teil von übereinander liegenden coextrudierten Folien mit abwechselnden opaken und transmittierenden Streifen derart angeordnet sein, dass opake und transmittierende Streifen benachbarter Folien jeweils übereinander liegen. Das heißt, der opake Streifen einer Folie liegt genau auf bzw. unter dem opaken Streifen einer anderen benachbarten Folie und das gleiche gilt für die transmittierenden Streifen. Ebenso kann zumindest ein Teil von übereinander liegenden coextrudierten Folien derart angeordnet sein, dass opake und transmittierende Streifen benachbarter Folien versetzt und/oder verdreht zueinander ausgerichtet sind, insbesondere verdreht um einen Winkel von 90°. Hierdurch werden vorzugsweise begrenzte Fenster innerhalb der Fläche der Folie gebildet.

Die Dicke des Kartenkörpers der Datenträgerkarte liegt in einer bevorzugten Variante der Erfindung zwischen 80 µm und 840 µm. Hierdurch wird eine ausreichende Stabilität des Kartenkörpers gewährleistet. In einer weiteren Ausgestaltung der erfindungsgemäßen Datenträgerkarte ist die oder zumindest eine coextrudierte Folie zumindest auf einer Seite bedruckt bzw. mit einer Ablackierung versehen. Auf diese Weise können weitere optische Effekte erzeugt werden.

Neben der oben beschriebenen Datenträgerkarte umfasst die Erfindung ferner ein Verfahren zur Herstellung einer solchen Datenträgerkarte, wobei der Kartenkörper der Datenträgerkarte durch Coextrusion zumindest einer Folie derart gebildet wird, dass die zumindest eine Folie zumindest zwei Bereiche mit unterschiedlichen Materialeigenschaften aufweist. Die Coextrusion erfolgt dabei insbesondere mit einer Mehrschichtdüse einer Coextrusionsanordnung und vorzugsweise bei einer Temperatur von im Wesentlichen 230 °C und mehr, insbesondere bei 250 °C. In einer weiteren Variante werden auf zumindest einer Seite der coextrudierten Folie eine oder mehrere weitere Folien durch Laminieren aufgebracht, wodurch eine mehrlagige Datenträgerkarte gebildet werden kann. Das Herstellungsverfahren umfasst üblicherweise weitere Schritte, insbesondere das Ausstanzen des Kartenkörpers aus der coextrudierten Folie bzw. aus der mehrlagigen Schichtstruktur aus coextrudierter Folie und weiteren Folien, das Aufbringen eines Chips bzw. eines Magnetstreifens und dergleichen.

Ausführungsbeispiele der Erfindung werden nachfolgend anhand der beigefügten Figuren detailliert beschrieben.

Es zeigen:
- Fig.1 bis Fig. 3: Querschnittsansichten von drei verschiedenen Ausführungsformen eines Kartenkörpers einer Chipkarte;
- Fig. 4 bis Fig. 6: drei verschiedene Ausführungsformen von Verfahren zur Herstellung der jeweiligen Kartenkörper gemäß Fig. 1 bis Fig. 3;
- Fig. 7: eine schematische Darstellung der Anordnung von zwei übereinander liegenden Folien bei der Herstellung eines Kartenkörpers gemäß einer weiteren Ausführungsform und
- Fig. 8 und Fig. 9: perspektivische Ansichten von zwei weiteren Ausführungsformen von Kartenkörpern einer Chipkarte.

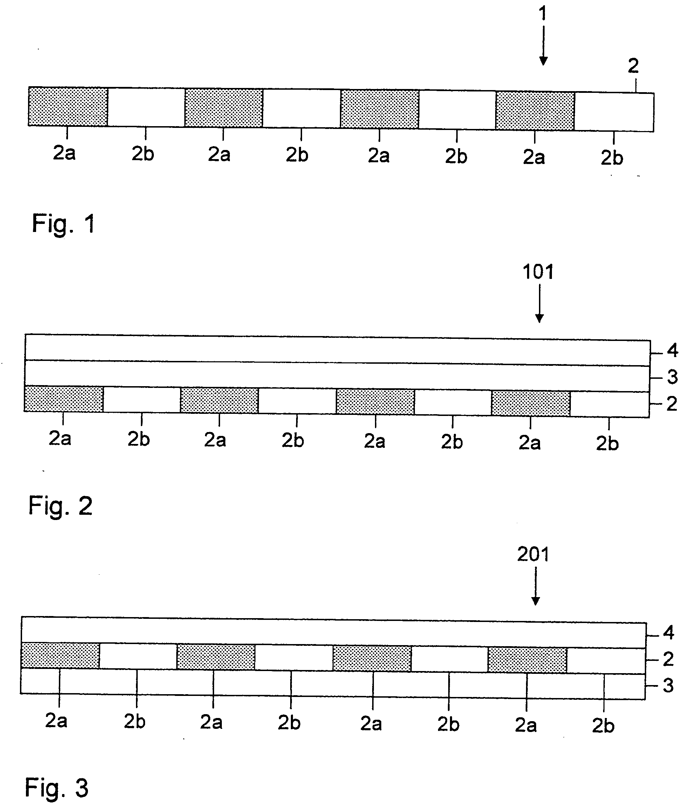

Fig.1 zeigt im Querschnitt eine erste Ausführungsform eines Kartenkörpers. Es handelt sich hierbei um einen einlagigen Kartenkörper umfassend eine einzelne Kunststofffolie 2. Diese Folie wird basierend auf einem Coextrusionsverfahren hergestellt, bei dem mehrere, aus verschiedenen Extrudern stammende Schmelzeströme in einer Mehrschichtdüse zusammengeführt werden, so dass in der Folie verschiedene Flächenbereiche aus den unterschiedlichen Schmelzeströmen gebildet werden. Die Schmelzeströme unterscheiden sich dabei in ihren Materialeigenschaften. In der Ausführungsform gemäß Fig. 1 werden durch die Mehrschichtdüse eine Vielzahl von alternierenden Längsstreifen 2a und 2b gebildet, wobei die Streifen 2a und 2b jeweils zu dem gleichen Schmelzestrom eines entsprechenden Extruders gehören. Der Schmelzestrom, aus dem sich die Streifen 2a ergeben, basiert dabei auf einem opaken Polymermaterial, was durch den gepunkteten Querschnitt in Fig. 1 und allen weiteren Figuren angedeutet ist. Zwischen zwei Streifen 2a liegt ein Streifen 2b, der von einem Schmelzestrom aus transparentem Polymer stammt.

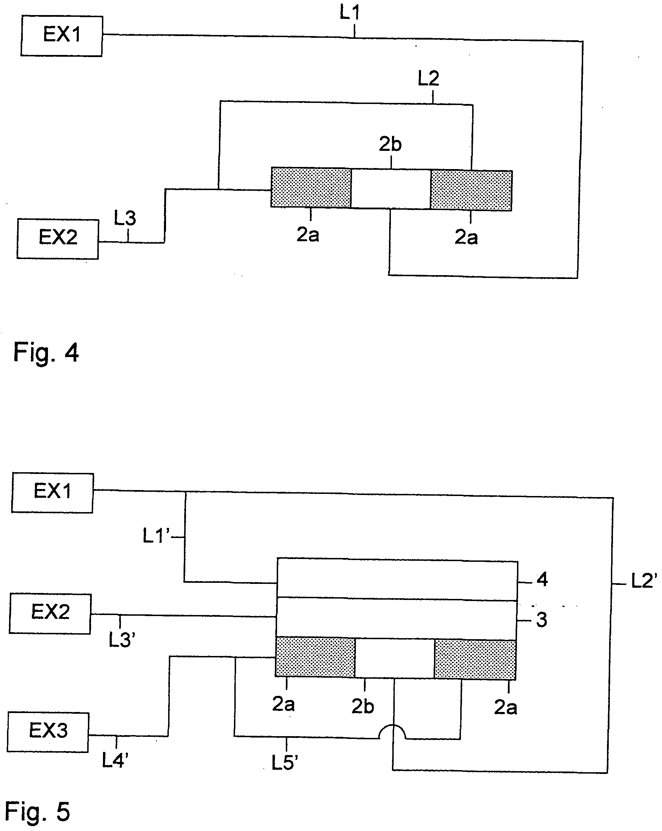

Fig. 4 zeigt schematisiert eine entsprechende Coextrusionsanordnung zur Bildung des Kartenkörpers gemäß Fig. 1. Durch den Extruder EX1 wird ein Schmelzestrom zur Bildung der transparenten Streifen 2b erzeugt, wie durch eine entsprechende Linie L1 angedeutet ist. Ferner wird durch den Extruder EX2 ein Schmelzestrom zur Bildung der opaken Streifen 2a generiert, was durch entsprechende Linien L2 und L3 angedeutet ist. Die Bildung der aneinander liegenden Streifen erfolgt mit Hilfe einer (nicht gezeigten) Mehrschichtdüse mit entsprechenden Düsenöffnungen und Zuführungen für die Schmelzeströme zur Bildung der benachbarten Streifen 2a bzw. 2b. Aus Übersichtlichkeitsgründen sind in Fig. 4 nur drei benachbarte Streifen 2 gezeigt, wobei durch mehrfache Wiederholungen von sich abwechselnden benachbarten Streifen 2a und 2b der Folienquerschnitt gemäß Fig. 1 erzeugt wird.

Coextrusionsverfahren sind im Allgemeinen bekannt, so dass eine detaillierte Beschreibung solcher Verfahren und entsprechende Parallelmehrdüsen-Extrusionsvorrichtungen zur Durchführung solcher Verfahren weggelassen werden. Nichtsdestotrotz ist die Verwendung von Coextrusionsverfahren zur Erzeugung von Kartenkörpern umfassend Flächenbereiche mit unterschiedlichen Materialeigenschaften nicht aus dem Stand der Technik bekannt. Die Coextrusion findet vorzugsweise bei der Temperatur der Schmelzeströme von ca. 250 °C statt. Hierdurch entsteht eine homogene Folie ohne erkennbare mechanische Schwachstellen bzw. Sollbruchstellen.

Fig. 2 zeigt eine zweite Ausführungsform eines erfindungsgemäßen Kartenkörpers. Dieser Kartenkörper 101 weist analog zu Fig. 1 eine coextrudierte Folie 2 auf, welche auf die gleiche Art und Weise wie die Folie der Fig. 1 hergestellt sein kann. Im Unterschied zu dem Kartenkörper 1 der Fig. 1 sind nunmehr jedoch zwei weitere Folien 3 oder 4 oberhalb der Folie 2 angeordnet, wobei die Folien 3 und 4 in der Ausführungsform der Fig. 2 transparent sind und vollflächig aus dem gleichen Polymermaterial bestehen. Die Folien können in einer Ausführungsform separat gefertigt werden und anschließend auf die Folie 2 auflaminiert werden. Die Folien selbst werden vorzugsweise ebenfalls durch Extrusion hergestellt. Die Verwendung von weiteren Folien erhöht die Stabilität des Kartenkörpers. Die einzelnen Folien können darüber hinaus unterschiedliche Rezepturbestandteile enthalten, z.B. Laseradditive, Sicherheitsmerkmale, optische Merkmale und dergleichen.

Anstatt die Folien 3 und 4 durch Laminieren aufzubringen, kann die Schichtstruktur gemäß Fig. 2 auch in einem einzelnen Coextrusionsschritt mit einer entsprechend ausgestalteten und angesteuerten Mehrschichtdüse gebildet werden. Eine entsprechende Coextrusionsanordnung für die Durchführung einer solchen Coextrusion ist schematisiert in Fig. 5 angedeutet. Es werden nunmehr drei Extruder EX1, EX2 und EX3 verwendet. Der Extruder EX1 erzeugt den Schmelzestrom der obersten Schicht 4 sowie die Schmelzeströme der transparenten Streifen 2b, wie durch Linien L1' und L2' angedeutet ist. Durch den Extruder EX2 wird der Schmelzestrom für die mittlere transparente Folie 3 generiert (Linie L3'). Demgegenüber erzeugt der Extruder EX3 den opaken Schmelzestrom der entsprechenden opaken Streifen 2a, wie durch Linien L4' und L5' wiedergegeben ist. Aus Übersichtlichkeitsgründen sind nur drei der Streifen der Folie 2 wiedergegeben. Die Bildung des Schmelzestroms für die oberste Folie 4 gemäß der Linie L1' ist optional und kann gegebenenfalls weggelassen werden, wodurch nur eine einzelne zusätzliche Folie 3 auf der Folie 2 ausgebildet wird. Gemäß Fig. 5 wird ein Coextrusionsverfahren realisiert, welches unterschiedliche Schmelzeströme nicht nur flächig in horizontaler Richtung, sondern auch in Richtung der Dicke des Schichtaufbaus erzeugt. Die Coextrusion umfasst somit auch die gleichzeitige Erzeugung mehrerer unterschiedlicher Folienschichten.

Fig. 3 zeigt in Querschnittsansicht eine dritte Ausführungsform eines erfindungsgemäßen Kartenkörpers. Der Kartenkörper 201 der Fig. 3 entspricht dabei im Wesentlichen dem Kartenkörper 101 der Fig. 2. Jedoch ist nunmehr die Folie 2 mit den einzelnen Streifen 2a und 2b zwischen den beiden transparenten Folien 3 und 4 angeordnet. Auch bei diesem Aufbau wird eine erhöhte mechanische Stabilität des Kartenkörpers erreicht. Analog zu Fig. 2 können die Folien 3 und 4 separat, insbesondere durch Extrusion, gefertigt werden und anschließend auf die coextrudierte Folie 2 auflaminiert werden.

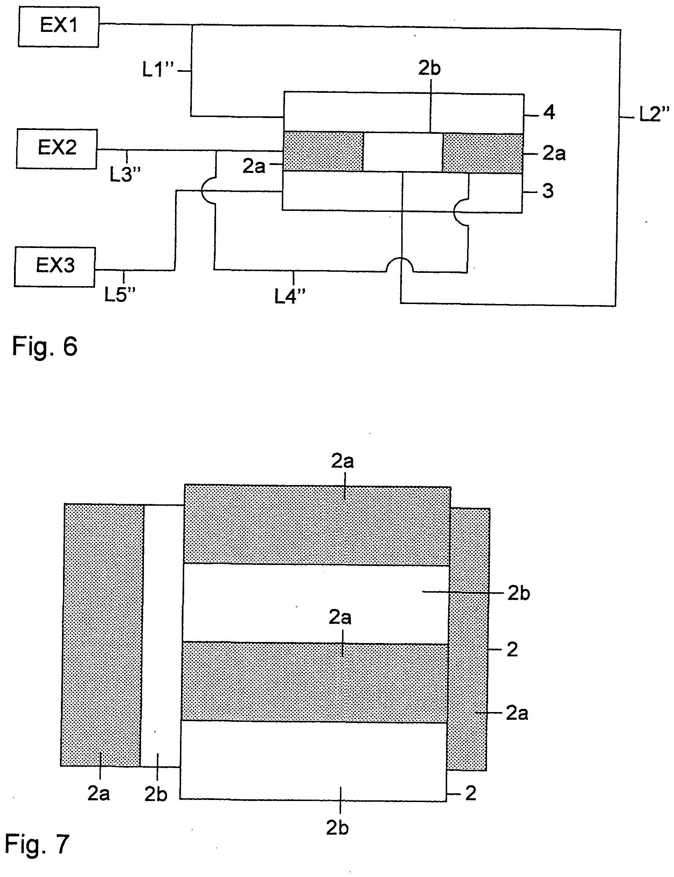

Die Schichtstruktur der Folien gemäß Fig. 3 kann jedoch auch in einem einzelnen Coextrusionsschritt erzeugt werden. Eine hierfür vorgesehene Extrusionsanordnung ist schematisiert in Fig. 6 wiedergegeben. Die Anordnung der Fig. 6 entspricht größtenteils der Anordnung gemäß Fig. 5. Über einen Extruder EX1 wird der Schmelzestrom zur Bildung der oberen Folienschicht 4 und der transparenten Streifen 2b der Folie 2 erzeugt, wie durch Linien L1" und L2" angedeutet ist. Der Extruder EX2 generiert den Schmelzestrom der opaken Schichten 2a der Folie 2 (Linien L3" und L4"). Im Unterschied zur Anordnung der Fig. 5 wird nunmehr durch den Extruder EX3 ein unterer Schmelzestrom unter der Folie 2 zur Bildung der Folie 3 erzeugt, wie durch die Linie L5' angedeutet ist. Die Erzeugung der unterschiedlichen Folienbereiche in vertikaler sowie in horizontaler Richtung erfolgt dabei wiederum durch eine entsprechend ausgestaltete und angesteuerte Mehrschichtdüse mit einer Vielzahl von Düsenöffnungen.

Die mit den oben beschriebenen Verfahren erzeugten Kartenkörper gemäß Fig. 1 bis Fig. 3 weisen typische Dicken von 80 µm bis 840 µm auf, wobei je nach Anwendungsfall dickere oder dünnere Folien gewählt werden können und sich die Dicken der jeweiligen Folienschichten in einem Kartenkörper auch voneinander unterscheiden können.

Durch die erfindungsgemäße Herstellung von Kartenkörperfolien basierend auf Coextrusion können auf einfache Weise verschiedene Varianten von unterschiedlich ausgestalteten Datenträgerkarten gebildet werden. Insbesondere können mit entsprechenden Zusätzen in den einzelnen unterschiedlichen Schmelzeströmen der Extruder verschiedene lokal begrenzte Effekte in den Kartenkörpern erzeugt werden, wie z.B. Lichteffekte, Colourshift-Effekte und dergleichen. Weitere Lichteffekte können durch entsprechende Bedruckung der Folien erreicht werden. Die einzelnen Materialien, aus denen die Streifen der Folie 2 gemäß Fig. 1 bis Fig. 3 bestehen, können auf dem gleichen Basismaterial beruhen, wobei jedoch unterschiedliche Additive für Streifen 2a und 2b hinzugefügt sind. Ebenso können vollkommen unterschiedliche Polymermaterialien für die einzelnen Streifen 2a und 2b verwendet werden. Auch die Folien 3 und 4 gemäß Fig. 2 und Fig. 3 können gegebenenfalls aus unterschiedlichen Materialien bzw. aus Materialien mit verschiedenen Additiven bestehen.

Mit dem erfindungsgemäßen Coextrusionsverfahren können insbesondere Kartenkörper für ein elektronisches Passdokument hergestellt werden. Dabei ist der Kartenkörper aus einem Material gebildet, welches im Nahtbereich des Passes flexibel ist, um hierdurch ein gutes Umblättern des Passdokuments zu gewährleisten. Demgegenüber wird der Bereich des Kartenkörpers, auf dem sich die personenbezogenen Daten des Passes befinden, durch ein Material gebildet, welches eine gewisse Steifigkeit aufweist, um hierdurch die Stabilität des Dokuments zu erhöhen. Ebenso können bei Karten mit Biegeachsen mit Hilfe von Coextrusion die Bereiche entlang der Biegeachse aus strapazierfähigerem Material hergestellt werden als die anderen Bereiche. Diejenigen Materialbereiche, welche nicht entlang der Biegeachse liegen und somit eine geringere Beständigkeit aufweisen müssen, können aus preisgünstigerem, weniger stabilem Material hergestellt sein. Auf diese Weise werden die Kosten bei der Herstellung des Kartenkörpers verringert.

Wie oben dargelegt, können die einzelnen Streifen 2a bzw. 2b der Folie 2 gemäß Fig. 1 bis 3 aus dem gleichen Polymerbasismaterial mit unterschiedlichen Zusatzstoffen gebildet sein. Beispielsweise können für die opaken Bereiche 2a entsprechende Farbstoffe hinzugesetzt werden. Ebenso können die transparenten Bereiche 2b nicht komplett transparent, sondern lediglich teilweise transmittierend, d.h. transluzent, ausgestaltet sein, wobei diese Bereiche gegebenenfalls auch eingefärbt bzw. pigmentiert sein können. Ebenso können die einzelnen Streifen polarisierende Eigenschaften aufweisen. Gegebenenfalls können die Streifen 2a und 2b auch aus unterschiedlichen Polymermaterialien bestehen. Besonders bevorzugt kommen als Kunststoffmaterialien für die einzelnen Streifen der Folie 2 bzw. auch für die Folien 3 und 4 folgende Kunststoffe alleine oder in Kombination in Betracht: Polycarbonat, PET, PETG, TPE, TPU, Polyolefine, PA, PVC und ABS.

Weitere Effekte lassen sich dadurch erzielen, dass die entsprechenden Übergänge zwischen den unterschiedlichen Materialien je nach Anwendungsfall geeignet ausgestaltet werden, z.B. fließend oder scharf. Die Folien 3 und 4 gemäß den Ausführungsformen der Fig. 2 und Fig. 3 können gegebenenfalls eingefärbt sein, um so z.B. transluzente Anwendungen zu kreieren oder farbige Abstufungen im Durchlicht zu erzeugen.

In einer besonders bevorzugten Ausführungsform der Erfindung werden Kartenkörper aus einer Mehrzahl von coextrudierten Folien mit unterschiedlichen Flächenbereichen gebildet. Dies ist in der Ausführungsform gemäß Fig. 7 angedeutet, wobei in diesem Beispiel zwei identische coextrudierte Folien 2 mit abwechselnden opaken Streifen 2a und transparenten Streifen 2b übereinander angeordnet sind. Die einzelnen coextrudierten Folien entsprechen dabei im Aufbau der coextrudierten Folie 2 gemäß Fig. 1. Durch Versatz bzw. Verdrehung der Schichten zueinander lassen sich Kartenkörper mit transparenten Fenstern erzeugen. Gemäß Fig. 7 entstehen solche transparenten Fenster dadurch, dass die Streifen der unteren Folie um 90° gegenüber den Streifen der oberen Folie verdreht sind. In den Überlappungsbereichen zwischen den transparenten Streifen der unteren und der oberen Folie entstehen dann entsprechende quadratische Fenster.

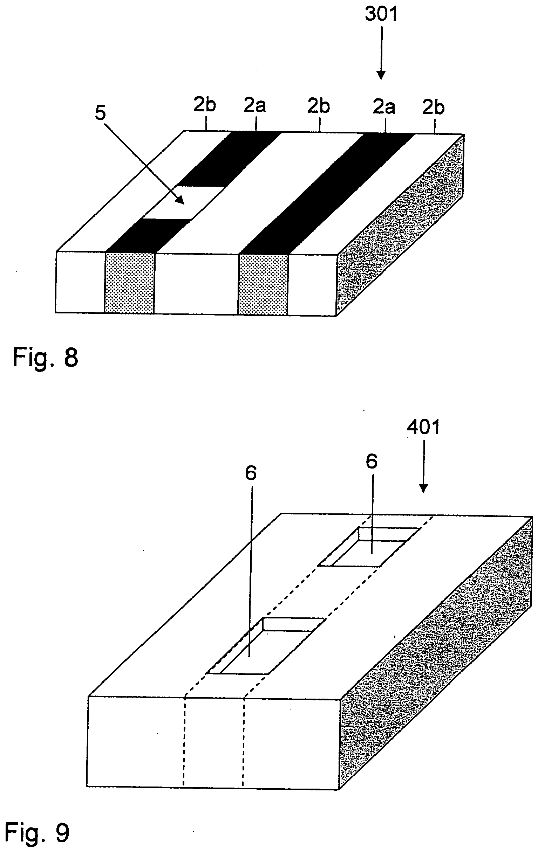

Gegebenenfalls kann die Oberfläche des Kartenkörpers in Teilbereichen bedruckt sein. Fig. 8 zeigt einen Kartenkörper 301 mit Bedruckung. Der Kartenkörper 301 umfasst eine Mehrzahl von (nicht einzeln gezeigten) Folien mit übereinander liegenden opaken und transparenten Bereichen. Es entstehen hierdurch sich durch die Gesamtdicke des Kartenkörpers erstreckende opake Streifen 2a sowie sich durch die Gesamtdicke des Kartenkörpers erstreckende transparente Streifen 2b. Der Kartenkörper 301 ist mit einem entsprechenden Druck 5 versehen, der in der Ausführungsform der Fig. 8 im opaken Bereich 2a aufgebracht ist. Der Druck kann gegebenenfalls auch derart ausgestaltet sein, dass er nur im transparenten bzw. im transparenten und opaken Bereich des Kartenkörpers liegt. Insbesondere kann die Bedruckung derart ausgestaltet sein, dass sich entsprechende Fensterbereiche von vorbestimmter Größe auf den transparenten Streifen ergeben.

Fig. 9 zeigt eine weitere Ausführungsform eines Kartenkörpers 401, bei dem Fensterbereiche 6 ausgebildet sind, welche sich nur teilweise in den Kartenkörper hinein und nicht durch diesen hindurch erstrecken. Solche ausnehmungsartigen Fensterbereiche 6 sind insbesondere von Vorteil, wenn ein Kartenkörper 401 später mit einem MLI (Multiple Laser Image) oder einem CLI (Changeable Laser Image) versehen werden sollen. Im Bereich der Fenster 6 kann dann eine größere Schichtdicke für die Aufnahme eines MLI s oder eines CLIs bereitgestellt werden. Das erlaubt wiederum die Ausgestaltung der MLIs bzw. CLIs mit größeren Linsenradien, wodurch die Herstellung der MLIs bzw. CLIs vereinfacht wird. Ein Kartenkörper wie in Fig. 9 gezeigt kann beispielsweise durch einen mehrschichtigen Aufbau gemäß Fig. 7 erzeugt werden. Die Generierung unterschiedlich großer Fensterbereiche kann dabei beispielsweise durch eine Variation der Breite der transparenten bzw. opaken Streifen der Folie 2 erreicht werden.

Wie sich aus den obigen Ausführungen ergibt, können durch die Verwendung von coextrudierten Folien für Kartenkörper von Datenträgerkarten viele unterschiedliche Varianten von Karten mit entsprechenden Eigenschaften im Hinblick auf Optik und Materialbeschaffenheit auf einfache Weise realisiert werden.

## Patentansprüche

1. Datenträgerkarte, insbesondere Chip- und/oder Magnetstreifenkarte, umfassend einen Kartenkörper (1, 101, 201, 301, 401) aus zumindest zwei Folien (2, 3, 4), die in einem Schritt durch Coextrusion erzeugt werden und eine Schichtstruktur bilden, wobei zumindest eine der Folien zumindest zwei flächig in horizontaler Richtung horizontal benachbart aneinanderliegenden Flächenbereiche (2a, 2b) mit unterschiedlichen Materialeigenschaften umfasst und zumindest eine weitere gleichzeitig erzeugte Folie (3, 4)in Richtung der Dicke der Schichtstruktur ausgebildet ist.

2. Datenträgerkarte nach Anspruch 1, **dadurch gekennzeichnet, dass** der Kartenkörper (1,101, 201,301,401) mehrere, übereinander liegende Folien (2,3,4) aufweist, welche miteinander laminiert sind und/oder durch Coextrusion ausgebildet sind.

3. Datenträgerkarte nach Anspruch 1 oder 2, **dadurch gekennzeichnet, dass** der Kartenkörper (1,101, 201, 301, 401) mehrere, übereinander liegende Folien (2,3,4) aufweist, wobei zumindest ein Teil der Folien (3,4) vollflächig aus einem Material gebildet sind und auf zumindest einer Seite der coextrudierten Folie (2) angeordnet sind.

4. Datenträgerkarte nach einem der vorhergehenden Ansprüche, **dadurch gekennzeichnet,** die zumindest zwei Flächenbereiche (2a, 2b) der oder zumindest einer coextrudierten Folie (2) aus dem gleichen Basismaterial mit unterschiedlichen Zusatzstoffen gebildet sind.

5. Datenträgerkarte nach einem der vorhergehenden Ansprüche, **dadurch gekennzeichnet, dass** zumindest ein Flächenbereich (2a) der zumindest zwei Flächenbereiche (2a, 2b) der oder zumindest einer coextrudierten Folie (2) opak und zumindest ein anderer Flächenbereich (2b) der zumindest zwei Flächenbereiche der coextrudierten Folie (2) transmittierend, insbesondere transparent oder transluzent, ist.

6. Datenträgerkarte nach einem der vorhergehenden Ansprüche, **dadurch gekennzeichnet, dass** zumindest ein Flächenbereich der zumindest zwei Flächenbereiche (2a, 2b) der oder zumindest einer coextrudierten Folie (2) polarisierend ist.

7. Datenträgerkarte nach einem der vorhergehenden Ansprüche, **dadurch gekennzeichnet, dass** zumindest ein Flächenbereich der zumindest zwei Flächenbereiche (2a, 2b) der oder zumindest einer coextrudierten Folie (2) aus elastischerem und/ oder strapazierfähigerem Material als zumindest ein anderer Bereich der zumindest zwei Bereiche der coextrudierten Folie (2) gebildet ist.

8. Datenträgerkarte nach Anspruch 7 zur Verwendung in einem elektronischen Identifikationsbuch, **dadurch gekennzeichnet**, das ein an der Nahtstelle des Identifikationsbuchs liegender Bereich der oder zumindest einer coextrudierten Folie (2) elastischer ist als ein nicht an der Nahtstelle des Identifikationsbuchs liegender Bereich der coextrudierten Folie (2).

9. Datenträgerkarte nach einem der vorhergehenden Ansprüche, **dadurch gekennzeichnet, dass** zumindest ein Bereich der zumindest zwei Flächenbereiche (2a, 2b) der oder zumindest einer coextrudierten Folie (2) eines oder mehrere der folgenden Materialien umfasst: Polycarbonat, PET, PETG, TPE, TPU, Polyolefine, PA, PVC, ABS.

10. Datenträgerkarte nach einem der vorhergehenden Ansprüche, **dadurch gekennzeichnet, dass** zumindest ein Teil der Übergänge zwischen zwei benachbarten Flächenbereichen (2a, 2b) der oder zumindest einer coextrudierten Folie (2) scharf und/oder fließend ausgeführt sind.

11. Datenträgerkarte nach einem der vorhergehenden Ansprüche, **dadurch gekennzeichnet, dass** eine oder mehrere coextrudierte Folien (2) mit jeweils zumindest einem opaken Flächenbereich (2a) und zumindest einem transmittierenden Flächenbereich (2b) derart ausgestaltet und/ oder übereinander angeordnet sind, dass die Datenträgerkarte zumindest ein Fenster (6) und/ oder zumindest einen Fensterstreifen aufweist.

12. Datenträgerkarte nach Anspruch 11, **dadurch gekennzeichnet, dass** das zumindest eine Fenster (6) und/ oder der zumindest eine Fensterstreifen sich durch den Kartenkörper (1,101, 201, 301, 401) hindurch erstrecken und/ oder an einem opaken Bereich des Kartenkörpers (1, 101,201,301,401) enden.

13. Datenträgerkarte nach einem der vorhergehenden Ansprüche, **dadurch gekennzeichnet, dass** die oder zumindest eine coextrudierte Folie (2) eine Mehrzahl von sich abwechselnden opaken und transmittierenden Streifen (2a, 2b) umfaßt, wobei zumindest ein Teil von übereinander liegenden coextrudierten Folien (2) mit abwechselnden opaken und transmittierenden Streifen (2a, 2b) derart angeordnet sind, dass durch die Anordnung das zumindest eine Fenster und/ oder der zumindest eine Fensterstreifen (6) gebildet wird.

14. Datenträgerkarte nach Anspruch 13, **dadurch gekennzeichnet, dass** zumindest ein Teil von übereinander liegenden coextrudierten Folien (2) mit abwechselnden opaken und transmittierenden Streifen (2a, 2b) derart angeordnet sind, dass opake und transmittierende Streifen benachbarter Folien (2) jeweils übereinander liegen.

15. Datenträgerkarte nach Anspruch 13 oder 14, **dadurch gekennzeichnet, dass** zumindest ein Teil von übereinander liegenden coextrudierten Folien (2) mit abwechselnden opaken und transmittierenden Streifen (2a, 2b) derart angeordnet sind, dass opake und transmittierende Streifen benachbarter Folien (2) versetzt und/ oder verdreht, insbesondere um einen Winkel von 90°, zueinander ausgerichtet sind.

16. Verfahren zur Herstellung einer Datenträgerkarte nach einem der vorhergehenden Ansprüche, **dadurch gekennzeichnet, dass** der Kartenkörper (1, 101, 201, 301, 401) durch Coextrusion zumindest zweier Folien (2, 3, 4) in einem Coextrusionsschritt derart gebildet wird, dass die Folien eine Schichtstruktur bilden, wobei eine Folie zumindest zwei flächig in horizontaler Richtung horizontal benachbart aneinanderliegende Flächenbereiche (2a, 2b) mit unterschiedlichen Materialeigenschaften aufweist und zumindest eine weitere gleichzeitig erzeugte Folie (3, 4) in Richtung der Dicke der Schichtstruktur ausgebildet ist.

17. Verfahren nach Anspruch 16, **dadurch gekennzeichnet, dass** die Coextrusion bei einer Temperatur von im Wesentlichen 200 °C und mehr, insbesondere bei 230 °C, erfolgt.

18. Verfahren nach Anspruch 17, **dadurch gekennzeichnet, dass** auf zumindest einer Seite der zumindest einen coextrudierten Folie eine oder mehrere weitere Folien (3, 4) durch Laminieren aufgebracht werden.

## Claims

1. A data carrier card, in particular a chip card and/or magnetic strip card, comprising a card body (1, 101, 201, 301, 401) of at least two foils (2, 3, 4) that are produced in one step by coextrusion and form a layer structure, wherein at least one of the foils comprises at least two surface regions (2a, 2b) with different material properties disposed flatly in the horizontal direction, in horizontally neighboring fashion, adjacent to each other and at least one further simultaneously produced foil (3, 4) is formed in the direction of the thickness of the layer structure.

2. The data carrier card according to claim 1, **characterized in that** the card body (1, 101, 201, 301, 401) has several, superposed foils (2, 3, 4) which are laminated together and/or formed by coextrusion.

3. The data carrier card according to claim 1 or 2, **characterized in that** the card body (1, 101, 201, 301, 401) comprises several, superposed foils (2, 3, 4), wherein at least a portion of the foils (3, 4) is formed from one material over the entire surface and is arranged on at least one side of the coextruded foil (2).

4. The data carrier card according to any of the preceding claims, **characterized in that** the at least two surface regions (2a, 2b) of the, or at least one, coextruded foil (2) are formed from the same basic material with different additives.

5. The data carrier card according to any of the preceding claims, **characterized in that** at least one surface region (2a) of the at least two surface regions (2a, 2b) of the, or at least one, coextruded foil (2) is opaque and at least one other surface region (2b) of the at least two surface regions of the coextruded foil (2) is transmissive, in particular transparent or translucent.

6. The data carrier card according to any of the preceding claims, **characterized in that** at least one surface region of the at least two surface regions (2a, 2b) of the, or at least one, coextruded foil (2) is polarizing.

7. The data carrier card according to any of the preceding claims, **characterized in that** at least one surface region of the at least two surface regions (2a, 2b) of the, or at least one, coextruded foil (2) is formed from more elastic and/or more hard-wearing material than at least one other region of the at least two regions of the coextruded foil (2).

8. The data carrier card according to claim 7 for use in an electronic identification book, **characterized in that** a region of the, or at least one, coextruded foil (2) that is located at a seam of the identification book is more elastic than a region of the coextruded foil (2) not located at the seam of the identification book.

9. The data carrier card according to any of the preceding claims, **characterized in that** at least one region of the at least two surface regions (2a, 2b) of the, or at least one, coextruded foil (2) comprises one or several of the following materials: polycarbonate, PET, PETG, TPE, TPU, polyolefins, PA, PVC, ABS.

10. The data carrier card according to any of the preceding claims, **characterized in that** at least a portion of the transitions between two neighboring surface regions (2a, 2b) of the, or at least one, coextruded foil (2) is executed sharply and/or smoothly.

11. The data carrier card according to any of the preceding claims, **characterized in that** one or several coextruded foils (2) with at least one opaque surface region (2a) and at least one transmissive surface region (2b) each are so configured and/or arranged one over the other that the data carrier card has at least one window (6) and/or at least one windowed strip.

12. The data carrier card according to claim 11, **characterized in that** the at least one window (6) and/or the at least one windowed strip extend through the card body (1, 101, 201, 301, 401) and/or end at an opaque region of the card body (1, 101, 201, 301, 401).

13. The data carrier card according to any of the preceding claims, **characterized in that** the, or at least one, coextruded foil (2) comprises a plurality of alternating opaque and transmissive strips (2a, 2b), wherein at least a portion of superposed coextruded foils (2) having alternating opaque and transmissive strips (2a, 2b) are arranged such that the at least one window and/or the at least one windowed strip (6) is formed by the arrangement.

14. The data carrier card according to claim 13, **characterized in that** at least a portion of superposed coextruded foils (2) having alternating opaque and transmissive strips (2a, 2b) is arranged such that opaque and transmissive strips of neighboring foils (2) are superposed in each case.

15. The data carrier card according to claim 13 or 14, **characterized in that** at least a portion of superposed coextruded foils (2) having alternating opaque and transmissive strips (2a, 2b) is arranged such that opaque and transmissive strips of neighboring foils (2) are oriented so as to be offset and/or rotated, in particular by an angle of 90°, relative to each other.

16. A method for manufacturing a data carrier card according to any of the preceding claims, **characterized in that** the card body (1, 101, 201, 301, 401) is formed by coextrusion of at least two foils (2, 3, 4) in one coextrusion step, such that the foils form a layer structure, wherein one foil has at least two surface regions (2a, 2b) with different material properties disposed flatly in the horizontal direction, in horizontally neighboring fashion, adjacent to each other and at least one further simultaneously produced foil (3,4) is formed in the direction of the thickness of the layer structure.

17. The method according to claim 16, **characterized in that** the coextrusion is effected at a temperature of substantially 200° C and more, in particular at 230° C.

18. The method according to claim 17, **characterized in that** one or several further foils (3, 4) are applied by lamination to at least one side of the at least one coextruded foil.

## Revendications

1. Carte support de données, en particulier carte à puce et/ou carte à bande magnétique, comprenant un corps de carte (1, 101, 201, 301, 401) consistant en au moins deux films (2, 3, 4) qui sont générés en une étape par coextrusion et constituent une structure en couches, au moins un des films comprenant au moins deux zones de surface (2a, 2b) juxtaposées planes dans le sens horizontal, horizontalement adjacentes ayant différentes propriétés de matériaux, et au moins un autre film (3, 4) généré en même temps étant réalisé dans le sens de l'épaisseur de la structure en couches.

2. Carte support de données selon la revendication 1, **caractérisée en ce que** le corps de carte (1, 101, 201, 301, 401) comporte plusieurs films (2, 3, 4) superposés qui sont laminés les uns aux autres et/ou sont réalisés par coextrusion.

3. Carte support de données selon la revendication 1 ou 2, **caractérisée en ce que** le corps de carte (1, 101, 201, 301, 401) comporte plusieurs films (2, 3, 4) superposés, au moins une partie des films (3, 4) étant constitués à pleine surface par un matériau et étant agencés sur au moins une face du film (2) coextrudé.

4. Carte support de données selon une des revendications précédentes, **caractérisée en ce que** les au moins deux zones de surface (2a, 2b) ou le au moins un film (2) coextrudé sont constitués par le même matériau de base avec des additifs différents.

5. Carte support de données selon une des revendications précédentes, **caractérisée en ce qu'**au moins une zone de surface (2a) des au moins deux zones de surface (2a, 2b) du ou d'au moins un film (2) coextrudé est opaque et au moins une autre zone de surface (2b) des au moins deux zones de surface du film (2) coextrudé est transmettrice, de préférence transparente ou translucide.

6. Carte support de données selon une des revendications précédentes, **caractérisée en ce qu'**au moins une zone de surface des au moins deux zones de surface (2a, 2b) du ou d'au moins un film (2) coextrudé est polarisante.

7. Carte support de données selon une des revendications précédentes, **caractérisée en ce qu'**au moins une zone de surface des au moins deux zones de surface (2a, 2b) du ou d'au moins un film (2) coextrudé est constituée par un matériau plus élastique et/ou plus robuste qu'au moins une autre zone des au moins deux zones du film (2) coextrudé.

8. Carte support de données selon la revendication 7 destinée à être utilisée dans un livret d'identification électronique, **caractérisée en ce qu'**une zone du ou d'au moins un film (2) coextrudé située à la jointure du livret d'identification est plus élastique qu'une zone du film (2) coextrudé non située à jointure du livret d'identification.

9. Carte support de données selon une des revendications précédentes, **caractérisée en ce qu'**au moins une zone des au moins deux zones de surface (2a, 2b) du ou d'au moins un film (2) coextrudé comprend un ou plusieurs des matériaux suivants : polycarbonate, PET, PETG, TPE, TPU, polyléfine, PA, PVC, ABS.

10. Carte support de données selon une des revendications précédentes, **caractérisée en ce qu'**au moins une zone des transitions entre deux zones de surface (2a, 2b) adjacentes du ou d'au moins un film (2) coextrudé est confectionné sous forme aiguë et/ou fluide.

11. Carte support de données selon une des revendications précédentes, **caractérisée en ce qu'**un ou plusieurs films (2) coextrudés ayant respectivement au moins une zone de surface (2a) opaque et au moins une zone de surface (2b) transmettrice sont réalisés ou agencés les uns au-dessus des autres de telle sorte que la carte support de données comporte au moins une fenêtre (6) et/ou au moins un ruban fenêtre.

12. Carte support de données selon la revendication 11, **caractérisée en ce que** la au moins une fenêtre (6) et/ou le au moins un ruban fenêtre s'étendent à travers le corps de carte (1, 101, 201, 301, 401) et/ou s'arrêtent à une zone opaque du corps de carte (1, 101, 201, 301, 401).

13. Carte support de données selon une des revendications précédentes, **caractérisée en ce que** le ou au moins un film (2) coextrudé comprend une pluralité de rubans (2a, 2b) opaques et transmetteurs s'alternant, au moins une partie de films (2) coextrudés superposés à rubans (2a, 2b) opaques et transmetteurs s'alternant étant agencés de telle façon que, par l'agencement, la au moins une fenêtre et/ou le au moins un ruban fenêtre (6) est constitué(e).

14. Carte support de données selon la revendication 13, **caractérisée en ce qu'**au moins une partie de films (2) coextrudés superposés à rubans (2a, 2b) opaques et transmetteurs s'alternant sont agencés de telle façon que des rubans opaques et transmetteurs de films (2) adjacents sont respectivement superposés.

15. Carte support de données selon la revendication 13 ou 14, **caractérisée en ce qu'**au moins une partie de films (2) coextrudés superposés à rubans (2a, 2b) opaques et transmetteurs s'alternant sont agencés de telle façon que des rubans opaques et transmetteurs de films (2) adjacents sont orientés les uns par rapport aux autres de manière décalée et/ou vrillée, en particulier d'un angle de 90°.

16. Procédé de fabrication d'une carte support de données selon une des revendications précédentes, **caractérisé en ce que** le corps de carte (1, 101, 201, 301, 401) est constitué par coextrusion d'au moins deux films (2, 3, 4) lors d'une étape de coextrusion de telle façon que les films constituent une structure en couches, un film comportant au moins deux zones de surface (2a, 2b) juxtaposées planes dans le sens horizontal, horizontalement adjacentes ayant différentes propriétés de matériaux et au moins un autre film (3, 4) généré en même temps étant réalisé dans le sens de l'épaisseur de la structure en couches.

17. Procédé de fabrication selon la revendication 16, **caractérisé en ce que** la coextrusion a lieu à une température d'essentiellement 200° C et davantage, en particulier à 230° C.

18. Procédé de fabrication selon la revendication 17, **caractérisé en ce que**, sur au moins une face du au moins un film coextrudé, un ou plusieurs autres films (3, 4) sont appliqués par laminage.
